# FASCICULE DE BREVET EUROPEEN

(11) **EP 1 111 942 B1**
(45) Date de publication et mention de la délivrance du brevet: **30.01.2008**
(21) Numéro de dépôt: 00403064.9
(22) Date de dépôt: 06.11.2000
(51) Int. Cl.: H04Q 3/62

(54) **Demi-lien applicatif pour échangeur de reseau privé**
Halbe Linkanwendung für einer Vermittlungsanlage eines privaten Netzes
Half link application for exchange of private network

(30) Priorité: 23.12.1999 FR 9916339
(43) Date de publication de la demande: 27.06.2001
(73) Titulaire: Alcatel Lucent, 75008 Paris (FR)
(72) Inventeur: Litteaut, Jacques, 78160 Marly le Roi (FR); Bennai, Lahcen, 95100 Argenteuil (FR)
(74) Mandataire: Sciaux, Edmond

(56) Documents cités:
- US-A- 5 333 183
- TOIT DU A: "PRIVATE PBX NETWORKS: COST EFFECTIVE COMMUNICATIONS SOLUTIONS" PROCEEDINGS OF THE AFRICON CONFERENCE,US,NEW YORK, IEEE, vol. -, 22 septembre 1992 (1992-09-22), pages 637-640, XP000420285

## Description

L'invention concerne les réseaux téléphoniques privés et plus particulièrement, les services en temps réel dans les échangeurs de tels réseaux téléphoniques privés.

Un échangeur de réseau privé, par exemple un échangeur commercialisé par la demanderesse sous la référence AS 4000, comprend du point de vue fonctionnel deux parties distinctes. Une première partie fournit des services en temps réel, tandis qu'une autre partie de l'échangeur fournit des services en mode mixte. Les services en temps réels sont notamment les services liés à la transmission des appels en cours. Les services en mode mixte sont utilisés par des machines ou des applications pour lesquels le temps réel n'est pas indispensable. On peut notamment citer les services de routage d'appels, de taxation spécifique ou encore d'analyse de trafic. Le document US 5.333.183 décrit une exemple de réseau privé comportant plusieurs échangeurs qui utilisent un service en mode mixte pour analyser le trafic et élaborer des statistiques et des alarmes.

Il est aussi connu d'utiliser un protocole spécifique pour le dialogue entre des échangeurs en temps réel. Le document XP000420285 TOIT DU A : «PRIVATE PBX NETWORKS: COST EFFECTIVE COMMUNICATIONS SOLUTIONS » PROCEEDINGS OF THE AFRICAN CONFERENCE, US, NEW YORK, IEEE, décrit plusieurs protocoles utilisables pour le dialogue entre des échangeurs en temps réel. On peut de ce point de vue citer le protocole ABCF, qui est un protocole multi-constructeurs, utilisé notamment par la demanderesse, mais aussi par d'autres constructeurs. Un autre protocole ouvert utilisé pour un dialogue en temps réel entre des échangeurs de réseau privé est le protocole QSIG; des détails sur ce protocole sont fournis dans la norme ETS 300172.

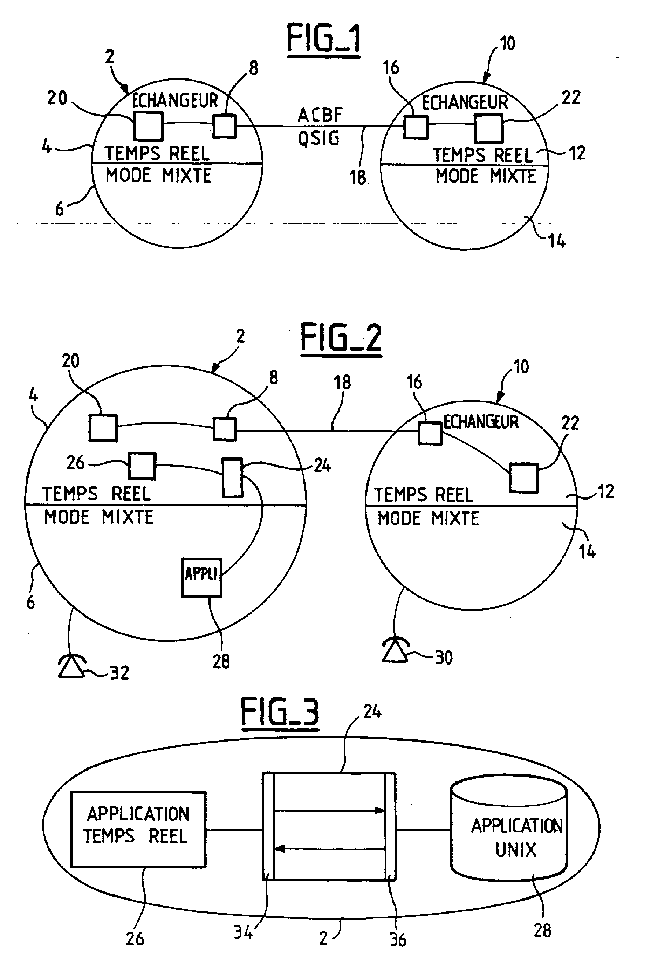

La figure 1 montre une représentation schématique de deux échangeurs et des éléments nécessaires au dialogue entre les échangeurs. Chacun des échangeurs 2 et 10 présente comme expliqué ci-dessus une partie fonctionnant en temps réel 4 ou 12 et une partie fonctionnant en mode mixte 6 ou 14. Est prévu dans la partie fonctionnant en temps réel de chaque échangeur un joncteur 8 ou 16. Chacun des joncteur sépare l'échangeur d'un lien 18. Les deux joncteurs sont reliés, et communiquent entre eux suivant le protocole ABCF ou suivant le protocole QSIG. Deux applications 20 et 22 exécutées respectivement sur la partie temps réel des échangeurs 2 et 10 communiquent à travers les joncteurs 8 et 16 et le lien 18. Sur la figure, on n'a représenté schématiquement qu'un joncteur sur chaque échangeur, ainsi qu'un lien direct entre les deux joncteurs. Il va de soi qu'une configuration réelle peut être plus complexe que cette configuration schématique.

L'invention vise à résoudre le problème nouveau de dialogue entre une application en mode mixte dans la partie en mode mixte d'un échangeur, et une application en temps réel dans la partie en temps réel d'un échangeur privé. Un tel dialogue n'était ni possible ni prévu dans les échangeurs de l'art antérieur.

Elle propose à cet effet un demi-lien applicatif, qui permet une communication entre des applications en temps réel et en mode mixte. Plus précisément, l'invention propose un échangeur pour réseau privé de télécommunications, fonctionnant d'une part en temps réel et d'autre part en mode mixte, cet échangeur comprenant : au moins une application en temps réel qui fournit des services en temps réel, liés à la transmission d'appels en cours, et au moins une autre application, en mode mixte, qui fournit des services en mode mixte, pour lesquels le temps réel n'est pas indispensable ; **caractérisé** par en ce qu'il comporte un demi-lien applicatif qui permet une communication directe entre l'application en temps réel et l'application en mode mixte, ce demi lien applicatif présentant, d'une part, une interface apte à dialoguer avec les applications en temps réel d'un échangeur, et d'autre part une interface apte à dialoguer avec les applications en mode mixte ; et qui présente une interface avec un protocole utilisé par l'échangeur pour les connexions vers l'extérieur des applications fonctionnant en temps réel et une interface applicative vers au moins une application fonctionnant en mode mixte. Le protocole peut par exemple être le protocole QSIG.

D'autres caractéristiques et avantages de l'invention apparaîtront à la lecture de la description qui suit de modes de réalisation de l'invention, donnée à titre d'exemple uniquement et en référence aux dessins annexés qui montrent :
- figure 1, une représentation schématique de deux échangeurs de l'art antérieur;
- figure 2, une représentation schématique de deux échangeurs mettant en oeuvre l'invention;
- figure 3, une représentation schématique d'un échangeur selon l'invention.

L'invention propose de prévoir dans un échangeur un demi-lien applicatif, qui présente d'une part une interface apte à dialoguer avec les applications en temps réel d'un échangeur, et d'autre part une interface apte à dialoguer avec les applications en mode mixte.

La figure 2 montre une représentation schématique de deux échangeurs mettant en oeuvre l'invention. On a représenté à la figure les éléments déjà décrits à la figure 1, qui ne sont pas décrits de nouveau. L'invention propose de prévoir un demi-lien 24 dans un échangeur2. Le demi-lien 24 est une application fonctionnant sur la partie temps réel de l'échangeur; il présente d'une part une interface modélisée, au protocole de communication entre deux échangeurs; dans l'exemple, il s'agit d'une interface au protocole ABCF ou d'une interface au protocole QSIG. Cette première interface permet à une application en temps réel de se connecter au demi-lien, comme représenté sur la figure par le trait joignant l'application 26 en temps réel au demi-lien 24.

Le demi-lien présente d'autre part une interface permettant à une application 28 fonctionnant en mode mixte de se connecter au demi-lien, comme représenté sur la figure par le trait joignant l'application 28 et le demi-lien 24. Dans l'exemple il s'agit d'une interface applicative, qui dépend de l'environnement utilisé dans la partie de l'échangeur fonctionnant en mode mixte; il peut par exemple s'agir d'une interface UNIX.

Le demi-lien permet ainsi une communication entre une application fonctionnant en temps réel et une application fonctionnant en mode mixte sur un échangeur. Elle permet de conserver, dans la partie temps réel de l'échangeur, les couches et les interfaces déjà existantes, et limite donc les modifications nécessaires. Du côté de l'échangeur fonctionnant en mode mixte, l'invention permet aux applications une connexion directe, sans nécessiter non plus de développements spécifiques.

On décrit maintenant un exemple d'application de l'invention. Dans l'exemple, l'invention est utilisée pour gérer des renvois d'appels. Un abonné 30 de l'échangeur 10, représenté schématiquement sur la figure 2, a demandé les services suivants :
- renvoi des courriers électroniques vers une adresse électronique différente;
- renvoi des appels vocaux vers un numéro d'un site extérieur, et
- en l'absence de réponse du numéro du site extérieur, renvoi des appels vers le numéro d'un secrétariat.

Ces différents services sont fournis et programmés par une application fonctionnant en mode mixte; il peut s'agir d'une application distribuée ou locale, mais il est en tout état de cause avantageux que l'application fonctionne en mode mixte, pour minimiser l'occupation des ressources temps réels des échangeurs. Dans l'exemple, l'application est symbolisée par l'application 28 de l'échangeur 2. Cette application présente typiquement des fonctionnalités de surveillance du trafic, pour intercepter les appels à destination des postes ayant programmé un renvoi.

Un abonné 32 de l'échangeur 2 appelle l'abonné 30 ayant programmé ces services. L'application 28 fournissant les services détecte l'appel, à travers le demi-lien 24. Dans le cas d'un courrier électronique, l'application 28 reçoit le courrier électronique, et envoie le courrier électronique à l'adresse électronique différente programmée par l'abonné 30; cette fonction peut avantageusement être effectuée en mode mixte, et l'invention dans ce cas permet d'éviter l'occupation de ressources temps réel. Dans le cas d'un appel vocal, l'application 28 envoie au routeur d'appel à travers le demi-lien 24 une instruction d'appel vers le numéro du site extérieur, et une instruction d'appel du numéro du secrétariat en absence de réponse. Le demi-lien envoie ces instructions au protocole utilisé habituellement par les applications temps réel pour communiquer entre elles, et par exemple, au protocole ABCF. L'appel de l'abonné 32 est donc dirigé vers le numéro du site extérieur, en temps réel. SI ce numéro ne répond pas, l'appel est dirigé vers le numéro du secrétariat.

L'invention permet de limiter l'occupation des ressources temps réel des échangeurs; elle évite aussi les développements spécifiques pour les applications temps réels; de fait, ces applications utilisent le protocole habituel pour les transmissions entre applications en mode temps réels de deux échangeurs. La présence de l'application 28 de gestion des renvois dans l'échangeur 2 - par exemple dans le cas d'une application distribuée - permet en outre d'éviter tout appel de l'échangeur 2 vers l'échangeur 10, et limite donc l'occupation des ressources de communication existant entre l'échangeur 2 et l'échangeur 10.

Dans une autre application, l'invention peut être utilisée pour l'observation de trafic. Une application d'observation de trafic fonctionne dans la partie en mode mixte d'un échangeur. Cette application est reliée à la partie en temps réel de l'échangeur à travers un demi-lien selon l'invention. Les appels sont gérés par la partie en temps réel de l'échangeur; les demandes d'appel et les acquittements d'appels sont tracés par l'application d'observation, à travers le demi-lien applicatif. L'invention dans ce cas permet d'établir un historique des communications, sans pour autant devoir utiliser une application fonctionnant en temps réel. De ce point de vue, les ressources utilisées dans la partie temps réel de l'échangeur sont limitées au demi-lien de l'invention. L'application d'observation peut en outre être développée dans un environnement habituel, et par exemple sous UNIX.

La figure 3 montre une représentation schématique de l'invention. Elle montre l'échangeur 2, une application 28 fonctionnant en mode mixte - par exemple une application sous Unix, une application 26 en temps réel, ainsi que le demi-lien de l'invention. Le demi-lien présente une interface 34 au protocole utilisé par l'échangeur pour les connexions des applications en temps réel vers l'extérieur - le protocole ABCF ou QSIG dans l'exemple -. Il présente aussi une interface applicative 36 susceptible d'être adressée par les applications . Le demi-lien assure la conversion d'un format à l'autre, comme symbolisé sur les flèches de la figure 3. L'invention peut être réalisée par l'homme du métier, comme toute application destinée à fonctionner sur un échangeur.

L'échangeur muni d'un demi-lien selon l'invention fonctionne de façon différente d'un échangeur de l'art antérieur. De fait, à l'inverse de l'art antérieur, il permet une communication directe entre des applications ou des machines situées d'une part du côté temps réel et d'autre part du côté mode mixte.

Bien entendu, l'invention n'est pas limitée aux exemples de modes de réalisation décrits; dans les exemples une application en mode mixte accède au demi-lien; on pourrait prévoir que le demi-lien est utilisé pour plusieurs applications. Dans les exemples de réalisation, le demi-lien est utilisé pour communiquer avec des applications; on peut aussi l'utiliser pour dialoguer entre deux terminaux connectés sur le même échangeur, et fonctionnant l'un en temps réel et l'autre en mode mixte. Dans l'exemple de la figure, le demi-lien est représenté dans la partie de l'échangeur fonctionnant en temps réel; de fait, au moins l'interface du demi-lien au protocole ABCF ou QSIG fonctionne en temps réel. Il est clair qu'une partie du demi-lien peut ne pas fonctionner en temps réel.

## Revendications

1. Un échangeur (2, 10) pour réseau privé de télécommunications, fonctionnant d'une part (4, 12) en temps réel et d'autre part (6, 14) en mode mixte, cet échangeur comprenant : ou moins une application en temps réel qui fournit des services en temps réel, liés à la transmission d'appels en cours, et ou moins une autre application, en mode mixte, qui fournit des services en mode mixte, pour lesquels le temps réel n'est pas indispensable ;
**caractérisé en ce qu'**il comporte un demi-lien applicatif (24) qui permet une communication directe entre l'application en temps réel et l'application en mode mixte, ce demi lien applicatif présentant, d'une part, une interface apte à dialoguer avec les applications en temps réel d'un échangeur, et d'autre part une interface apte à dialoguer avec les applications en mode mixte ;
et qui présente une interface avec un protocole utilisé par l'échangeur pour les connexions vers l'extérieur des applications fonctionnant en temps réel.

2. Un échangeur selon la revendication 2, **caractérisé en ce que** le protocole est le protocole QSIG.

## Claims

1. Interchange unit (2,10) for a private telecommunications network executing partly (4,12) in real time and partly (6,14) in mixed mode, said interchange unit including: at least one real-time application which provides real-time services, connected to the transmission of calls in progress, and at least one other mixed-mode application which provides mixed-mode services for which real time is not indispensable;
**characterised in that** it includes an application-oriented half-link (24) which allows direct communication between the real-time application and the mixed-mode application, this application-oriented half-link having an interface capable of dialogue with the real-time applications of an interchange unit, and an interface capable of dialogue with the mixed-mode applications;
and which has a an interface using a protocol used by the interchange unit for connecting real-time applications to the outside.

2. Interchange unit according to claim 2, **characterised in that** the protocol is the QSIG protocol.

## Patentansprüche

1. Vermittlungsanlage (2, 10) für private Telekommunikationsnetze, die einerseits (4, 12) in Echtzeit und andererseits (6, 14) im kombinierten Modus betrieben werden, wobei diese Vermittlungsanlage Folgendes umfasst: Zumindest eine Echtzeit-Anwendung, die Echtzeit-Dienste bereitstellt, die mit der Übertragung von Rufverbindungen verknüpft sind, und zumindest eine weitere Anwendung im kombinierten Modus, die Dienste im kombinierten Modus bereitstellt, die nicht unbedingt in Echtzeit verarbeitet werden müssen;
**dadurch gekennzeichnet, dass** sie eine halbe Linkanwendung (24) umfasst, die eine direkte Kommunikation zwischen der Echtzeit-Anwendung und der Anwendung im kombinierten Modus ermöglicht, wobei diese halbe Linkanwendung einerseits eine Schnittstelle umfasst, die dem Dialog mit den Echtzeit-Anwendungen einer Vermittlungsanlage dient, und andererseits eine Schnittstelle, die dem Dialog mit den Anwendungen im kombinierten Modus dient;
und die eine Schnittstelle mit einem Protokoll umfasst, das von der Vermittlungsanlage für die Außenverbindungen der Echtzeit-Anwendungen genutzt wird.

2. Vermittlungsanlage gemäß Anspruch 2, **dadurch gekennzeichnet, dass** sie das QSIG-Protokoll als Protokoll nutzt.
